# EUROPÄISCHE PATENTSCHRIFT

(11) **EP 0 551 818 B1**
(45) Veröffentlichungstag und Bekanntmachung des Hinweises auf die Patenterteilung: **18.09.1996**
(21) Anmeldenummer: 93100077.2
(22) Anmeldetag: 05.01.1993
(51) Int. Cl.: C08K 5/11, C08L 5/12, C08L 21/00

(54) **Vulkanisierbare Kautschukkompositionen**
Vulcanisable rubber compositions
Compositions de caoutchouc vulcanisables

(30) Priorität: 16.01.1992 DE 4200907
(43) Veröffentlichungstag der Anmeldung: 21.07.1993
(73) Patentinhaber: BAYER AG, 51368 Leverkusen (DE)
(72) Erfinder: Thoermer, Joachim, Dr., W-5090 Leverkusen (DE); Engels, Hans-Wilhelm, Dr., W-5014 Kerpen 3 (DE); Scholl, Thomas, Dr., W-5060 Bergisch Gladbach 2 (DE)

(56) Entgegenhaltungen:
- EP-A- 0 479 083
- EP-A- 0 482 470
- GB-A- 1 092 175
- US-A- 2 360 896
- US-A- 2 394 815
- US-A- 4 529 766
- DATABASE WPIL Section Ch, Week 1784, Derwent Publications Ltd., London, GB; Class A, AN 84-103531

## Beschreibung

Die Erfindung betrifft vulkanisierbare Kautschukmassen, die neben den üblichen dem Kautschukfachmann bekannten Zusätzen Schwefel, Beschleuniger, wie Thiurame und Thiazole, oder deren Kombination sowie einen Halbeester von Bernsteinsäüre und/oder Glutarsäure und/oder Adipinsäure oder dessen Salze als Vulkanisationspromotoren enthalten, ein Verfahren zur Herstellung dieser Kautschukmassen sowie die Verwendung dieser Kautschukmassen zur Herstellung von Vulkanisaten.

Als Vulkanisationsbeschleuniger werden bekanntlich Substanzen bezeichnet, die die Vulkanisationszeit verkürzen oder eine Vulkanisation bei niedrigerer Temperatur ermöglichen; vgl. Ullmanns Encyclopädie der technischen Chemie, 3. Aufl., Urban & Schwarzenberg, München-Berlin 1957, S. 383 ff. Zur Entfaltung der vollen Wirksamkeit der Vulkanisationsbeschleuniger werden gegebenenfalls Zusatzbeschleuniger mitverwendet; auch werden organische oder vorzugsweise anorganische Aktivatoren mitverwendet. Unter den anorganischen Aktivatoren werden hauptsächlich Metalloxide verstanden. Bevorzugt wird Zinkoxid verwendet.

Für die Schwefelvulkanisation werden häufig sogenannte "EV-Systeme" ("EV" = efficient vulcanization) eingesetzt, wobei man als Vulkanisationsbeschleuniger zumeist Thiuramverbindungen wie Tetraalkylthiurammonosulfide (z.B. Tetramethylthiurammonosulfid), Tetraalkylthiuramtetrasulfide (z.B. Tetramethylthiuramtetrasulfid) und vorzugsweise Tetraalylthiuramdisulfide (z.B. Tetramethylthiuramdisulfid, nachfolgend: TMTD) verwendet. Wegen ihrer ausgezeichneten Wirkung werden diese Thiuramverbindungen auch als Ultrabeschleuniger bezeichnet; insbesondere führen sie zu einer guten Heißluftbeständigkeit der damit hergestellten Vulkanisate.

Überraschend wurde nun gefunden, daß durch Zusatz von Bernsteinsäure und/oder Glutarsäure und/oder Adipinsäure, und hier besonders deren Zinksalzen, Kautschukkompositionen erhalten werden, die neben guter Verarbeitbarkeit bei der Vulkanisation in Schwefelsystemen zu Vulkanisaten mit guten Druckverformungsresten und vor allem guter Heißluftalterung, insbesondere in Thiuram-Systemen, führen.

Gegenstand der Erfindung sind also vulkanisierbare Kautschukmassen auf Basis von Naturkautschuk, Polychloropren, Polybutadien, Polyisopren, Styrol-Butadien-Copolymerisaten, Butadien-Olefin-Copolymerisaten ausgenommen EPDM und copolymerisate aus 95 bis 99,5 Gew.% Isobutene und 0,5 bis 5 Gew.% Butadien, Acrylnitril-Dien-Copolymerisaten ausgenommen hydrierter Nitrilkautsckuk oder Acrylester-Dien-Copolymerisaten, enthaltend
0,1 bis 2 Gew.-% Schwefel, gegebenenfalls in Form von Schwefelspendern,
1 bis 4,5 Gew.-% eines Vulkanisationsbeschleunigers
und 0,5 bis 6 Gew.-%, vorzugsweise 1 bis 4 Gew.-%, insbesondere 1 bis 3 Gew.-% eines Halbesters von Bersteinsäure und/oder Glutarsäure und/oder Adipinsäure oder seiner Salze, wobei sich die Gewichtsprozente auf den jeweils eingesetzten Kautschuk beziehen.

Die erfindungsgemäß eingesetzten Kautschuke sind bekannt und beispielsweise beschrieben in "Nitrilkautschuk" von W. Hofmann, Berliner Union Stuttgart 1965 sowie Synthetischer Kautschuk" in: Ullmann's Encyclopädie der Technischen Chemie, 4.Aufl., Bd. 13 (1977) Verlag Chemie, Weinheim.

Die für das erfindungsgemäße Verfahren geeigneten Kautschuke besitzen in der Regel Mooney-Viskositäten (DIN 53 523), von 10 bis 150, vorzugsweise 25 bis 80 (ML 1+4)/100° C.

Es ist auch möglich, die einzusetzenden Kautschuke als Gemische verschiedener Kautschuke einzusetzen.

Als Vulkanisationsbeschleuniger können neben den Thiazolen beispielsweise auch Thiurame eingesetzt werden. Bevorzugt werden als Beschleuniger Thiurame verwendet und zwar besonders in Mengen von 1 bis 3,5 Gew.-%, bevorzugt 1-2,5 Gew.-%. Die Thiazolbeschleuniger werden in Mengen von 0,5 bis 3,0 Gew.-%, bevorzugt 0,5 bis 2,0 Gew.-%, bezogen auf den eingesetzten Kautschuk, eingesetzt. Die Beschleuniger können sowohl einzeln als auch im Gemisch untereinander eingesetzt werden.

Eine Beschleunigerkombination kann aus mehreren Einzelbeschleuniger bestehen, z.B. aus 2,5 Gew.-% TMTD und 2 Gew.-% CBS (siehe dazu Abschnitt "Beispiele).

Bevorzugte Thiurambeschleuniger umfassen z.B. die Tetraalkylthiurammono- und -polysulfide, wobei die Alkylgruppen in der Regel 1 bis 4, vorzugsweise 1 oder 2 C-Atome besitzen; die Substituenten können aber auch cycloaliphatisch, aromatisch oder araliphatisch sein.

Bevorzugte Thiazolbeschleuniger umfassen insbesondere
2-Mercaptobenzothiazol,
Dibenzothiazyl-disulfid,
Benzothiazyl-2-cyclohexylsulfenamid (CBS),
Benzothiazyl-2-tert.-butylsulfenamid (TBBS),
N-Morpholinothio-2-benzothiazol (MBS),
Benzothiazyl-2-diisopropylsulfenamid (DIBS),
Benzothiazyl-2-tert.-amylsulfenamid (AMZ),
Benzothiazyl-dicyclohexylsulfenamid (DCBS) und
Morpholino-thiocarbonyl-sulfenmorpholid (OTOS).

Wie erwähnt, können die Halbester von Bersteinsäure, Glutarsäure und Adipinsäure auch in Form ihrer Salze eingesetzt werden. Die freien, partiellen Halbester lassen sich insbesondere dann einsetzen, wenn die Kautschukmassen reaktive Oxide von geeigneten Metallen enthalten, die dem Kautschukfachmann geläufig sind.

Die für die Halbester zu verwenden Alkoholkomponenten umfassen C₁-C₁₈-, vorzugsweise C₄-C₁₈-Alkoholen. Die Alkoholkomponenten können aliphatisch, cycloaliphatisch, araliphatisch und aromatisch sein; sie können (cyclo)olefinische C=C-Doppelbindungen ebenso wie Halogensubstituenten, z.B. Chlorsubstituenten enthalten, und sie können linear oder verzweigt sein. Bevorzugte Alkoholkomponenten umfassen Methanol, Isopropanol, n-, iso- und tert.-Butanol, Hexanol, Octanol, Decanol, Dodecanol, Stearylalkohol, Cyclohexanol, Benzylalkohol, Phenole, Bernsteinsäuremonooctylester, Glutarsäuremonobutylester- und monooctylester sind besonders bevorzugt.

Die Kationen der erfindungsgemäß zu verwendenden Salze partieller Ester leiten sich vorzugsweise von Alkali- und Erdalkalimetallen und von Zink ab, wobei die Zinksalze besonders zu bevorzugen sind.

Den Kautschuken kann man vor der Vulkanisation Vulkanisationshilfsmittel und - je nach Bedarf - Aktivatoren, Füllstoffe, wie z.B. Ruß, Weichmacher, Alterungsschutzmittel und/oder Verarbeitungshilfsmittel in üblichen Mengen zusetzen.

Die bedeutendsten anorganischen Aktivatoren sind die Metalloxide, insbesondere Zinkoxid. In einzelnen Fällen wird auch Magnesiumoxid oder Calciumhydroxid verwendet.

Als Verarbeitungshilfsmittel kommen beispielsweise Fettsäuren, wie z.B. Stearinsäure, in Frage.

Das Mischen der Komponenten kann auf üblichen Mischaggregaten erfolgen.

Bevorzugte Mischaggregate sind die in der Kautschukindustrie üblichen Kneter, Walzen, Innenmischer und Mischextruder, die in der Regel mit Scherraten von 1 bis 1000 sec⁻¹, vorzugsweise 1 bis 200 sec⁻¹ arbeiten.

Ein weiterer Gegenstand der Erfindung ist die Herstellung der erfindungsgemäßen Kautschukmassen durch Mischen der Komponenten, wobei die Zielgröße "Massetemperatur" je nach Mischaggregat über die Kühlwassertemperatur oder die Drehzahl und den Füllgrad erreicht wird.

Die Vulkanisation kann bei Temperaturen von 100 bis 200°C, vorzugsweise 120 bis 180°C, gegebenenfalls unter einem Druck von 10 bis 200 bar, erfolgen.

Die ausgezeichneten Vulkanisationseigenschaften der Kautschukmassen, insbesondere Druckverformungsreste und Heißluftalterung, werden in der Regel schon ohne Temperung erreicht, lassen sich jedoch durch eine Temperung oft noch verbessern.

Die erfindungsgemäß erhaltenen Vulkanisate sind hervorragend geeignet bei allen Anwendungen, bei denen neben guten mechanischen Eigenschaften der Druckverformungsrest, das Rückstellvermögen und die Heißluftbeständigkeit besonders gefragt sind. Das ist bei Anwendungen in der Erdölindustrie, z.B. Dichtungen, als auch im Automobilsektor, z.B. unter der Motorhaube, bei Dichtungen, Schläuchen, Membranen, Gummi-Metallteilen, Puffern und in Bremssystemen der Fall, kann aber auch in der Maschinenbauindustrie oder auch bei Rollen und Walzen Anwendung finden.

Die Anwendung im Latex-Bereich ist ebenfalls gegeben, doch gelten hier bei der Verarbeitung besondere Regeln, wie sie z.B. in "Vulkanisation und Vulkanisationshilfsmittel" von W. Hofmann (Herausgeber Bayer AG, Leverkusen 1965) Seite 123 ff beschrieben sind.

### Beispiele

Als Kautschuk wurde für die nachfolgenden Beispiele ein Butadien-Acrylnitril-Copolymerisat mit einer Mooney-Viskosität von 45 (Perbunan N 3307 NS der Bayer AG) verwendet.

Die Herstellung der Kautschukkomposition wurde wie folgt vorgenommen:
Auf einer Laborwalze wurde das Polymer mit der jeweiligen Schwefelmenge bei 40°C Walzentemperatur vorgemischt. Dann wurde dieser Batch in einem Labor-Kneter bei 40°C Kühlwassertemperatur mit den übrigen Bestandteilen und den Zinkhalbestersalzen, jedoch ohne die Beschleuniger, 3,5 Minuten gemischt, wobei eine Masse-Temperatur von ca. 135°C erreicht wurde. Nach dem Abkehren wurde die Masse auf 100 bis 105°C heruntergekühlt und die Beschleuniger zugefügt. Nach einer Minute wurde abgekehrt und nach 1/2 Minute entleert.

Die Vulkanisate wurden, wie in der Tabelle vorgegeben, in einer Presse hergestellt.

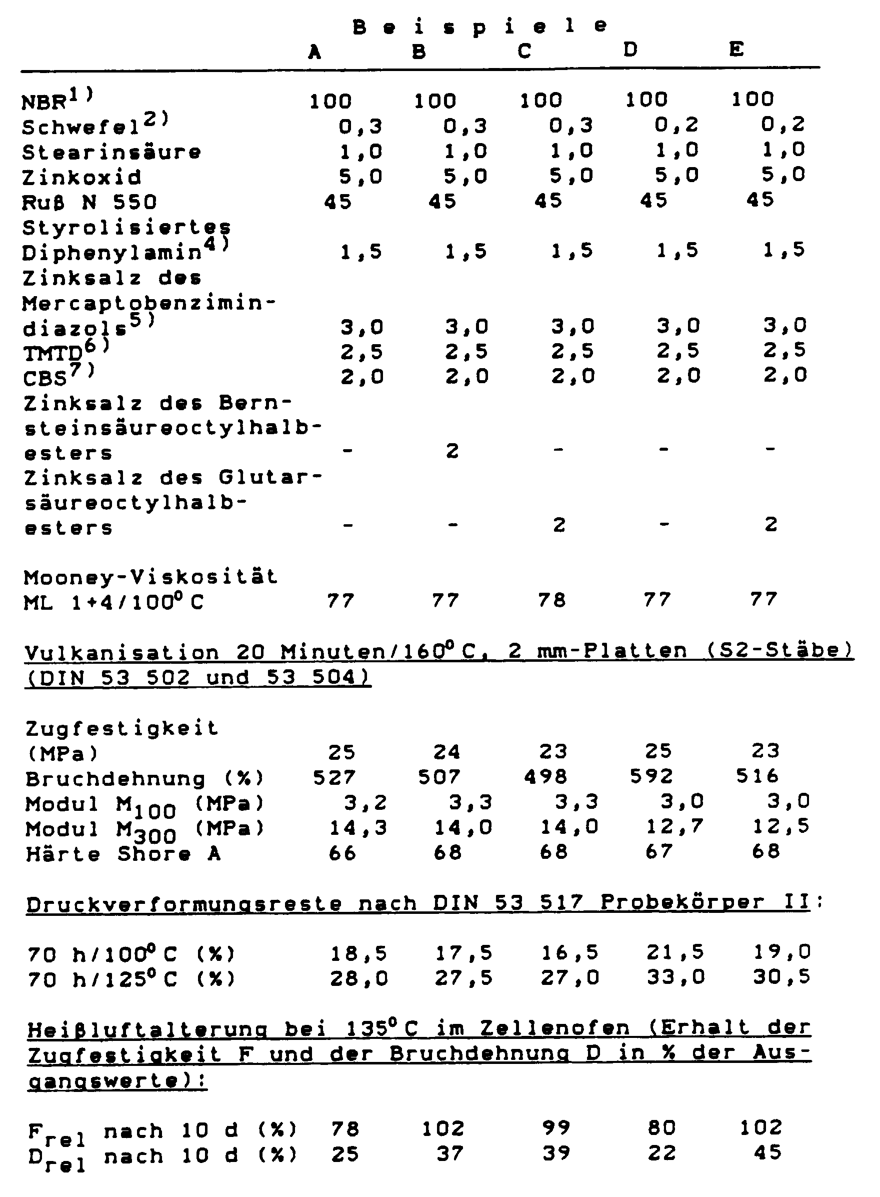

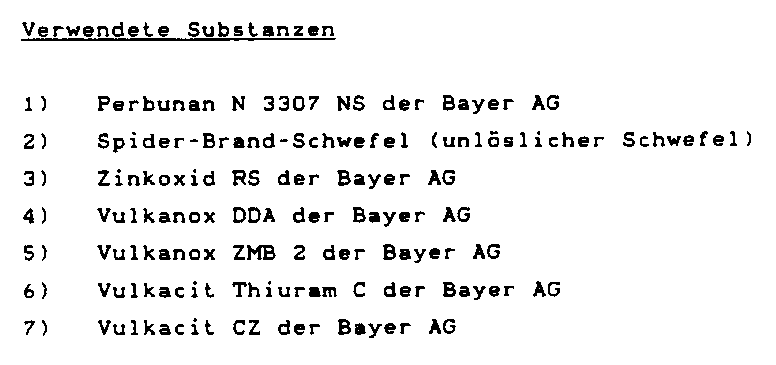

## Patentansprüche

1. Vulkanisierbare Kautschukmassen auf Basis von Naturkautschuk, Polychloropren, Polybutadien, Polyisopren, Styrol-Butadien-Copolymerisaten, Butadien-Olefin-Copolymerisaten ausgenommen EPDM und Copolymerisate aus 95 bis 99,5 Gew % Isobutene und 0,5 bis 5 Gew % Butadien, Acrylnitril-Dien-Copolymerisaten ausgenommen hydrierter Kautschuk oder Acrylsäureester-Dien-Copolymerisaten enthaltend
0,1 bis 2 Gew.-% Schwefel (gegebenenfalls in Form von Schwefelspendern),
1 bis 4,5 Gew.-% Vulkanisationsbeschleuniger und
0,5 bis 6 Gew.-% eines Halbesters von Bernsteinsäure und/oder Glutarsäure und/oder Adipinsäure, oder seiner Salze
wobei sich die Prozentangaben auf den jeweils eingesetzten Kautschuk beziehen.

2. Kautschukmassen nach Anspruch 1, wobei die Alkoholkomponente des partiellen Esters 1 bis 18 Kohlenstoffatome enthält.

3. Kautschukmassen nach Anspruch 1, wobei die Zinksalze der Halbester von Bernsteinsäure und/oder Glutarsäure und/oder Adipinsäure eingesetzt werden.

4. Verfahren zur Herstellung der Kautschukmassen nach Ansprüchen 1 bis 3 durch Mischen der Komponenten.

5. Verwendung der Kautschukmassen nach Ansprüchen 1 bis 3 zur Herstellung von Vulkanisaten.

## Claims

1. Vulcanisable rubber compositions based on natural rubber, polychloroprene, polybutadiene, polyisoprene, styrene-butadiene copolymers, butadiene-olefin copolymers with the exception of EPDM and copolymers comprising 95 to 99.5 wt.% of isobutene and 5 to 0.5 wt.% of butadiene, acrylonitrile-diene copolymers with the exception of hydrogenated rubber, or acrylic ester-diene copolymers, containing
from 0.1 to 2 wt.% of sulphur (optionally in the form of sulphur donors),
from 1 to 4.5 wt.% of vulcanisation accelerators and
from 0.5 to 6 wt.% of a half-ester of succinic acid and/or glutaric acid and/or adipic acid, or salts thereof,
with the percentages referring to the rubber used in each case.

2. Rubber compositions according to claim 1, wherein the alcohol component of the partial ester contains 1 to 18 carbon atoms.

3. Rubber compositions according to claim 1, wherein the zinc salts of the half-ester of succinic acid and/or glutaric acid and/or adipic acid are used.

4. Method for the preparation of the rubber compositions according to claims 1 to 3 by mixing the components.

5. Use of the rubber compositions according to claims 1 to 3 for the production of vulcanisates.

## Revendications

1. Masses de caoutchoucs vulcanisables à base de caoutchouc naturel, de polychloroprène, de polybutadiène, de polyisoprène, de copolymères styrène-butadiène, de copolymères butadiène-oléfine, à l'exception des caoutchoucs EPDM et des copolymères de 95 à 99,5 % en poids d'isobutènes et de 0,5 à 5 % en poids de butadiène, de copolymères acrylonitrile-diène (à l'exception du caoutchouc hydrogéné) ou de copolymères ester acrylique-diène, contenant
0,1 à 2 % en poids de soufre (le cas échéant sous la forme de fournisseurs de soufre),
de 1 à 4,5 % en poids d'accélérateurs de vulcanisation et
de 0,5 à 6 % en poids d'un hémiester succinique et/ou glutarique et/ou adipique ou ses sels,
les pourcentages indiqués se rapportant au caoutchouc mis en oeuvre dans chaque cas.

2. Masses de caoutchoucs selon la revendication 1, dans lesquelles le composant alcool de l'ester partiel contient de 1 à 18 atomes de carbone.

3. Masses de caoutchoucs selon la revendication 1, dans lesquelles on utilise les sels de zinc des hémiesters succiniques et/ou glutariques et/ou adipiques.

4. Procédé de préparation des masses de caoutchoucs selon les revendications 1 à 3, par mélange des composants.

5. Utilisation des masses de caoutchoucs selon les revendications 1 à 3 pour la fabrication de vulcanisats.
